# EUROPEAN PATENT APPLICATION

(11) **EP 1 191 721 A2**
(43) Date of publication of application: **27.03.2002**
(21) Application number: 01306131.2
(22) Date of filing: 17.07.2001
(51) Int. Cl.: H04H 1/00

(54) **Method and apparatus for transmitting a broadcast programme, in which parts of certain programmes are broadcast before their reproduction on a reproduction means has started**

(30) Priority: 19.07.2000 JP 2000219778
(71) Applicant: MATSUSHITA ELECTRIC INDUSTRIAL CO., LTD., Kadoma-shi, Osaka 571-8501 (JP)
(72) Inventor: Fujita, Kimikazu, Moriguchi-shi, Osaka-fu, 570-0014 (JP)
(74) Representative: Crawford, Andrew Birkby

(57) **Abstract**

According to the broadcasting apparatus of the invention, a part of the broadcasting bandwidth for the preceding time periods of the specific programs CM1, CM2, and CM3 is allocated to the specific programs and the other part of the broadcasting bandwidth is allocated to the program preceding to the specific programs. That is, the program data of the specific programs are transmitted not only in the time period during which the specific program should be reproduced but also in the preceding time period using the allotted bandwidth.

## Description

### BACKGROUND OF THE INVENTION

### (1) Field of the Invention

The present invention relates to a broadcasting apparatus that transmits contents data which makes up a data broadcasting program.

### (2) Description of the Related Art

Recently, digital broadcast for a television set via satellite has been put to practical use and digital broadcast via terrestrial wave also is now shifting to the stage of practical application.

Programs provided by the digital broadcast are classified into a normal program such as a movie and a drama and a data broadcasting program. The normal program mainly consists of a video stream and an audio stream which are reproduced at the same time by the receiving apparatus.

The data broadcasting program allows viewers to experience virtual interactive operations by repeatedly transmitting the program data, for example, at time intervals of 5 seconds. The method for repeatedly transmitting the program data is called a "data carousel transmission method." The program data consists of a plurality of image data which are selectively reproduced in accordance with a viewer's interactive operation. For instance, the image data is described in the Broadcast Markup Language (BML) (for detailed information about this language, see ARIB STD-B24 1.0 version "Data Coding and Transmission Specification for Digital Broadcasting").

The data broadcasting program may be broadcasted as an independent program and may be broadcasted simultaneously with a normal program. Hereafter, the normal program in the latter case will be refereed to as a "main program." In such a case, for example, a main program such as a movie is scaled down and presented on a part of the screen, and information on the actor who appears in the movie and his masterpieces are presented on another part of the screen as selected by the viewer. For another example, a commercial program (hereafter abbreviated as "CM") as a main program is scaled down and presented on a part of the screen, and detailed information on the product in the CM, information on the producer, and so on are presented on another part of the screen as selected by the viewer.

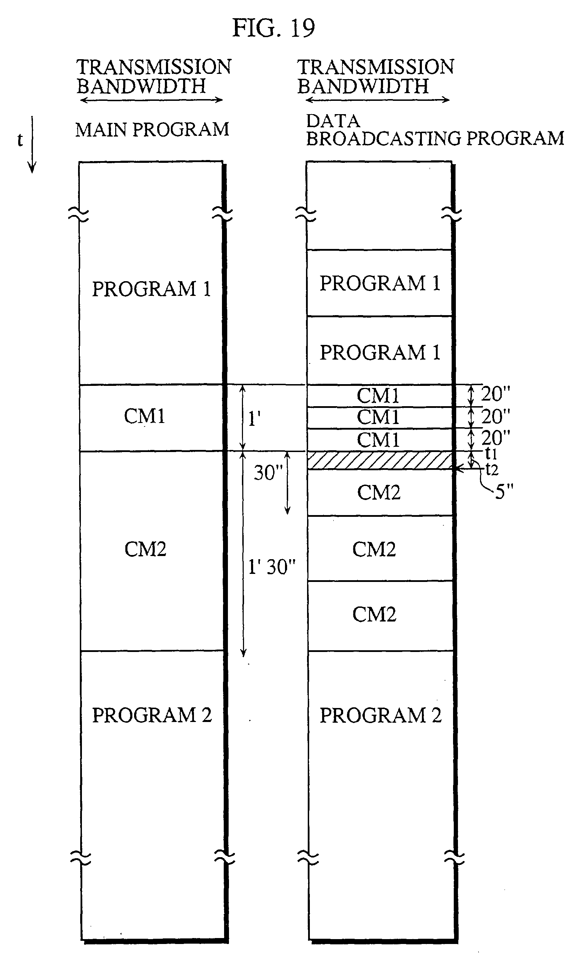

Fig. 19 shows transmission schedules for the broadcast data of a main program and a data broadcasting program. In this figure, the downward direction indicates a time flow and the breadth of the boxes indicates a bandwidth. The broadcast data of the main program consists of a video stream and an audio stream and is sequentially broadcast as time progresses. Meanwhile, the broadcast data of the data broadcasting program is broadcast according to the data carousel transmission method. For instance, the broadcast data of CM1 is transmitted three times in the time period for broadcasting the CM1.

When the receiving apparatus processes such a data broadcasting program, the viewer has to wait for the next image to be presented after an operation for selecting the next image until the receiving apparatus receives the data of the image (approximately one cycle of the carousel transmission). The receiving apparatus for coping with the problem is disclosed in the Japanese Laid-Open Patent Application No.10-126753. This receiving apparatus does not generate the waiting time by storing the broadcast data in a memory within the receiving apparatus and allowing the viewer to select and read the image data from the memory.

In this case, however, the data of the data broadcasting program is transmitted in the time period for broadcasting the data broadcasting program in the same manner as in the main program as shown in Fig. 19. Then, the receiving apparatus has not yet received all of the data just after beginning of the start of the data broadcasting program, and therefore the viewer cannot make use of interactive operations fully, which causes a problem that presentation of the next image that the viewer selects is delayed.

For instance, as shown in this figure, even if there is some image data that should be reproduced at the start of the program CM2, the receiving apparatus cannot present the image data for the cycle indicated by the diagonally shaded area in the figure until the time t2. This applies to CM1 in the figure as well and becomes a serious problem for the data broadcasting program such as a CM whose broadcast time period is short.

### SUMMARY OF THE INVENTION

The first object of the present invention is to provide a broadcasting apparatus, a broadcasting method, a program recording medium, and a program which reduces a time lag (i.e., a waiting time period for the receiving apparatus) between a starting time of broadcasting the data broadcasting program whose contents data is repeatedly transmitted and a starting time of reproduction of the contents data.

The second object of the invention is to provide a broadcasting apparatus, a broadcasting method, a program recording medium, and a program which, in case that a data broadcast and a normal broadcast including a video stream and an audio stream are reproduced simultaneously, enables a data broadcasting program in the data broadcast and a normal program in the normal broadcast to start to be reproduced at the same time.

The above first object can be achieved by a broadcasting apparatus (hereafter called apparatus A) that broadcasts a specific program to which a reproduction time period between a starting time and a finishing time is specified, the reproduction being performed by a receiving apparatus, the broadcasting apparatus is made up of: allotment means for allotting a broadcasting bandwidth for the reproduction time period to the specific program and allotting a part of the broadcasting bandwidth for a preceding time period immediately before the reproduction time period to the specific program and the other part of the broadcasting bandwidth to another program; and transmission means, in accordance with the result of allotment by the allotment means, for (a)repeatedly transmitting program data of the other program while transmitting program data of the specific program in the preceding time period, and (b) repeatedly transmitting the program data of the specific program in the reproduction time period.

With this construction, the program data of the specific program is transmitted using a part of the broadcasting bandwidth for the time period preceding to the reproduction time period. Therefore the receiving apparatus can receive the program data prior to the reproduction time period, and when the program data of the specific program should be reproduced in accordance with the viewer's interactive operation, a waiting time for receiving the program data is not generated even immediately after the starting time of reproduction.

Here, in the above broadcasting apparatus A, the allotment means allots the broadcasting bandwidth for the preceding time period so that the part of the broadcasting bandwidth becomes narrower than the other part of the broadcasting bandwidth, and the preceding time period is longer than a time period that is necessary for transmitting the program data of the specific program at least once using the part of the bandwidth.

With this construction, the bandwidth for the specific program (i.e., a part of the broadcasting bandwidth) is narrower than the bandwidth for the program preceding to the specific program in the preceding time period (i.e., the other part of the broadcasting bandwidth). Therefore, the program data of the specific program can be transmitted without interfering with the transmission of the preceding program.

Here, the above broadcasting apparatus A is further made up of: generation means for (a) generating a first instruction that instructs the receiving apparatus to store the program data of the specific program in a storing unit in the receiving apparatus, and (b) generating a second instruction that instructs the receiving apparatus to reproduce the program data in case that the program data of the specific program has been stored in the storing unit, in which the transmission means transmits a plurality of the first instructions in the preceding time period and transmits the second instruction at the starting time of the reproduction time period.

With this construction, the receiving apparatus can be easily controlled so as to store the program data of the specific program within the receiving apparatus in the preceding period and forcefully reproduce the program data that has been stored in the reproduction time period and the program data that starts to be received in the reproduction time period by transmitting the first and the second instructions.

Here, the above broadcasting apparatus A is further made up of: storage means for storing as the program data of the specific program (a) first contents data that makes up the specific program and (b) second contents data that is different from the first contents data in part, in which the transmission means transmits the first contents data in the preceding time period and transmits the second contents data in the reproduction time period of the specific program.

With this construction, the first contents data is reproduced for the viewer who starts to view a program from a time preceding to reproduction time period of the specific program, and the second contents data is reproduced for the viewer who starts to view the specific program from a time in the reproduction time period of the specific program. Thereby, different content in picture quality and information value is provided for each of the former and the latter viewers. For instance, when color graphical images and information including rich contents are used as the first contents data and monochrome graphical images and information including simple contents are used as the second contents data, such rich information can be provided for the former viewer and the minimum information can be provided for the latter viewer in a short time period.

Here, in the above broadcasting apparatus A, the transmission means further transmits a normal program that includes a video stream and an audio stream, the specific program has the program data that relates to a commercial program which is inserted in the normal program, and the reproduction time period of the specific program is the same as a broadcast time period of the commercial program.

With this construction, the receiving apparatus can reproduce the specific program having the content relating to the CM that is inserted in the normal program with being in synchronism with the CM. In addition, waiting time for all interactive operations does not occur even at the starting time of reproduction.

### BRIEF DESCRIPTION OF THE DRAWINGS

These and the other objects, advantages and features of the invention will become apparent from the following description thereof taken in conjunction with the accompanying drawings which illustrate a specific embodiment of the invention.

In the drawings:
Fig. 1 is a block diagram showing the construction of a broadcasting apparatus according to a preferred embodiment of the present invention;
Fig. 2 shows an example of the program information in which a normal program made up of audiovisual data and a data broadcasting program broadcasted by the data carousel transmission method are reproduced simultaneously;
Fig. 3 shows an example of an audiovisual data transmission schedule;
Fig. 4 shows an example of a contents transmission schedule;
Fig. 5 shows a main program, a data broadcasting program, and messages included in the data modules corresponding to the contents of the data broadcasting program;
Fig. 6 shows correspondences between contents management codes and data modules;
Fig. 7 shows an example of an event message transmission schedule;
Fig. 8 shows a procedure for transmitting data modules during a time period between 8:00:00 and 8:14:00;
Fig. 9 is a flow chart showing an operational procedure for preparing and transmitting a data module and an event message;
Fig. 10 is a block diagram showing the construction of a receiving apparatus;
Fig. 11 shows an example of reproduced images;
Fig. 12 is a block diagram showing the construction of a broadcasting apparatus according to the second embodiment;
Fig. 13 shows an example of a contents transmission schedule;
Fig. 14 shows an example of a contents transmission schedule;
Fig. 15 shows an example of a contents transmission schedule;
Fig. 16 shows an example of a contents transmission schedule;
Fig. 17 shows an example of an event message transmission schedule;
Fig. 18 shows an example in which the program 3 as the data broadcasting program is the specific program; and
Fig. 19 shows a transmission schedule for transmitting broadcast data by a conventional broadcasting apparatus.

### DESCRIPTION OF THE PREFERRED EMBODIMENT

### [Embodiment 1]

### (Construction)

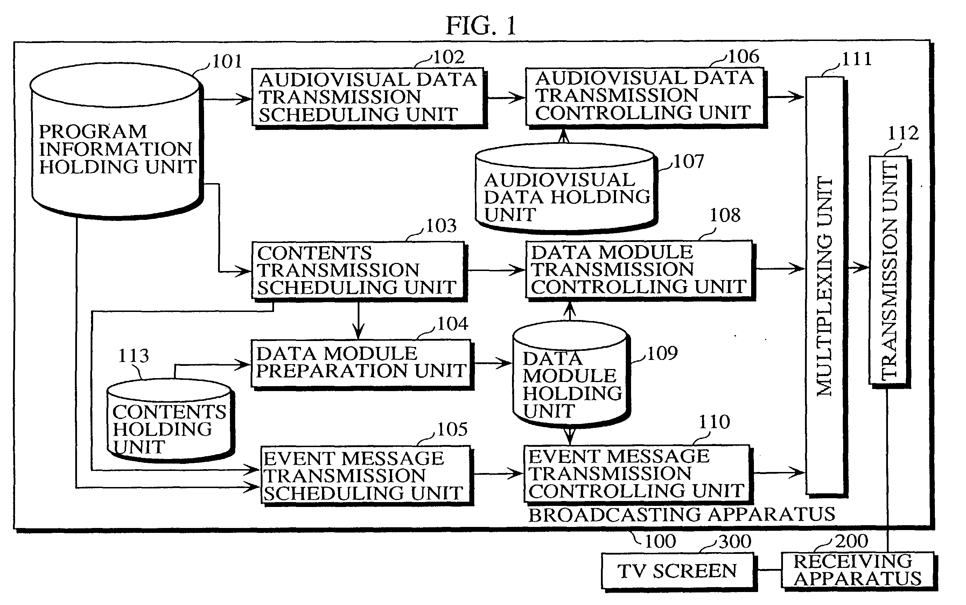

Fig. 1 is a block diagram showing the construction of a broadcasting apparatus according to the first embodiment. As shown in this figure, the broadcasting apparatus 100 is composed of a program information holding unit 101, an audiovisual data transmission scheduling unit 102, a contents transmission scheduling unit 103, a data module preparation unit 104, an event message transmission scheduling unit 105, an audiovisual data transmission controlling unit 106, an audiovisual data holding unit 107, a data module transmission controlling unit 108, a contents holding unit 113, a data module holding unit 109, an event message transmission controlling unit 110, a multiplexing unit 111, and a transmission unit 112. This broadcasting apparatus 100 is constructed so that contents data for the specific program among broadcasting programs is transmitted prior to the starting time of reproduction of the program (to be precise, a time period in which the receiving apparatus reproduces the program while presenting the same to viewers) . Here, as for a normal program composed of audiovisual data (a video stream and an audio stream), the broadcast time by the broadcasting apparatus substantially agrees with the reproduction time by the receiving apparatus, whereas as for the above specific program, the time for transmitting the broadcast data does not necessarily agree with the time for reproducing the broadcast data by the receiving apparatus while presenting the same to the viewers. Accordingly, the latter time (i.e., the time for reproducing the broadcast data by the receiving apparatus while presenting the same to the users) will be hereafter referred to as the reproduction time period.

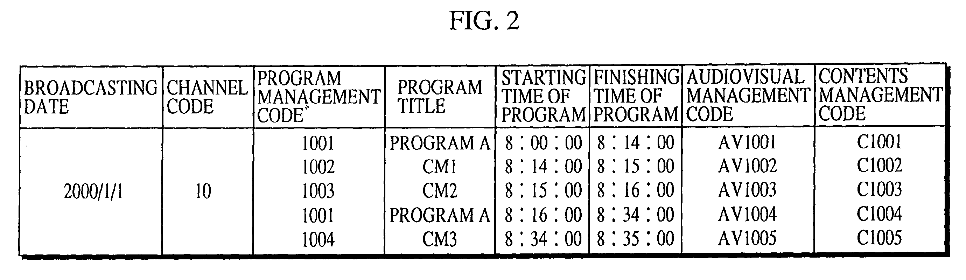

The program information holding unit 101 stores program information. Fig. 2 shows an example of the program information in which a normal program made up of audiovisual data and a data broadcasting program broadcasted by the data carousel transmission method are simultaneously reproduced (e.g., the case where a normal program is scaled down and presented on the screen) . Hereafter the normal program in such a case will be called a "main program." In this figure, the program information is composed of a set of information on a broadcasting date, a channel code, a program management code, a program title, a program starting time, a program finishing time, an audiovisual data management code which identifies the audiovisual data that makes up the main program, a contents management code which identifies the content of the data broadcasting program for each set of the main program and the data broadcasting program which are simultaneously reproduced. A time period between the program starting time and the program finishing time shown in this figure refers to the above-mentioned reproduction time period.

For instance, as for the program information on the program A as the main program, the broadcasting date is 2000/1/1, the channel code is 10, the program management code is 1001, the program starting time is 8 : 00 : 00, the program finishing time is 8:14:00, and the audiovisual data management code is AV1001, whereas as for the program information on the program A as the data broadcasting program, the broadcasting date is 2000/1/1, the channel code is 11, the program management code is 1001, the program starting time is 8:00:00, the program finishing time is 8:14:00, and the contents management code is C1001.

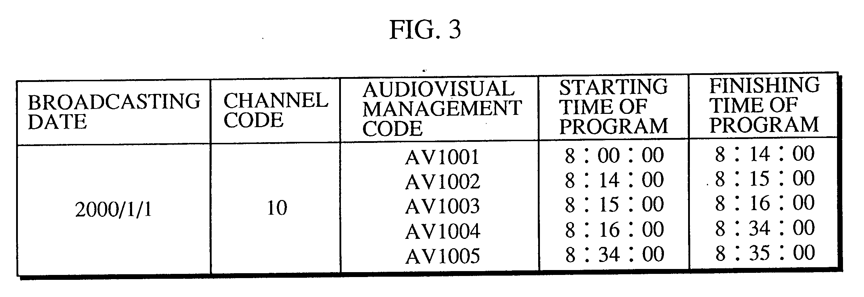

The audiovisual data transmission scheduling unit 102 prepares the schedule for transmitting the audiovisual data which makes up the main program in accordance with the program information stored in the program information holding unit 101 and outputs the schedule to the audiovisual data transmission controlling unit 106. Fig. 3 shows an example of an audiovisual data transmission schedule. As shown in this figure, the audiovisual data is transmitted in the reproduction time for the program. On receiving the transmitted audiovisual data, the receiving apparatus reproduces the audiovisual data in real time.

The contents transmission scheduling unit 103 is the most distinctive element in this embodiment, and prepares a schedule for transmitting a data broadcasting program so that contents data for specific programs are transmitted prior to broadcast of such programs. In this embodiment, the specific programs are commercial programs CM1, CM2, and CM3.

The contents transmission scheduling unit 103 identifies the specific programs by their program titles and the program management codes and prepares a transmission schedule so that the contents for the identified specific programs CM1, CM2, and CM3 are transmitted prior to the reproduction time periods of these programs. In this example, for instance, these contents. are transmitted from a midpoint of a broadcast time period of the program 1 that is the immediately preceding program to the CM1.

Here, the contents transmission scheduling unit 103 determines a bandwidth for transmitting the contents of the data broadcasting program. That is, the contents transmission scheduling unit 103 allots a part of the broadcasting bandwidth for transmitting the contents of the specific program and the other part of the broadcasting bandwidth for transmitting the preceding program in a time period preceding to the reproduction time period of the specific program, and allots an available bandwidth as much as possible for transmitting the contents of the specific programs in the reproduction time period of such programs. Here, in case that another specific program should be successively reproduced after the specific program, a part of the above bandwidth is allotted for transmitting the contents of the other specific program. Hereafter, a time period between a time at a predetermined time period before the program starting time of the reproduction time period of the specific program and the program starting time will be called a "preceding time period". The preceding time period is immediately before the reproduction time period and is a time period in which the contents for the specific program can be transmitted at least once using the part of the broadcasting bandwidth.

In this embodiment, the contents transmission scheduling unit 103 determines the transmission bandwidth, for example, in accordance with the following criteria. Here, D indicates the bandwidth which is allocated for transmitting all contents data.

### (Criterion A1)

The bandwidth for transmitting contents data for a specific program in the preceding time period is set at 0.1D.

That is, the contents data for the specific program is transmitted by using a narrow bandwidth such as 0.1D and setting a long period of the data carousel, because with decreasing the bandwidth for transmitting the contents data of the program preceding to the specific program, it takes a longer time for the receiving apparatus to acquire contents data of the program.

### (Criterion A2)

The bandwidth for transmitting contents data for control is set at 0.05D.

Here, the contents data for control (hereafter called "control contents") consists of messages only which designate the receiving apparatus to receive the contents of the specific program and cache it in the buffer, to start and finish reproducing the contents which has been cached in the buffer, and so on. The data size of the control contents is so small that the control contents can be transmitted in a short period even in such a narrow bandwidth as 0.05D. Therefore, a relatively narrow bandwidth is allotted for transmitting the control contents.

### (Criterion A3)

The bandwidth for transmitting the data broadcasting program is obtained by subtracting the bandwidth for transmitting the specific program in the preceding transmission period and the bandwidth for transmitting the control contents from the transmission bandwidth D.

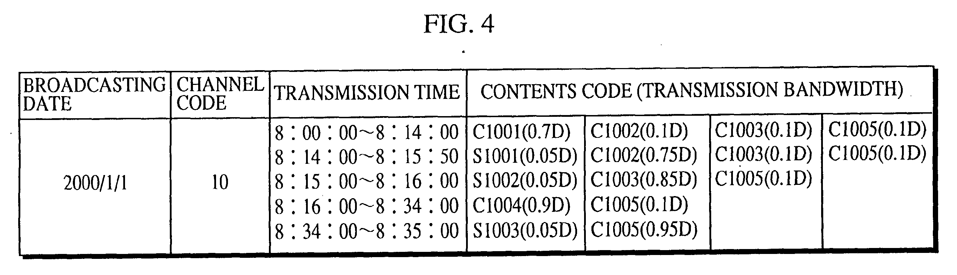

Fig. 4 shows an example of a contents transmission schedule. As shown in this figure, the time period between 8:00:00 and 8:14:00 is for the reproduction time period of the program 1 and is included in the preceding time periods of CM1, CM2, and CM3. In this period, the contents transmission scheduling unit 103 determines the schedule so that contents C1001 of the program 1 which is in the reproduction time period as well as contents C1002, C1003, C1005 of CM1, CM2, and CM3 as the specific programs are transmitted. The bandwidths for transmitting C1002, C1003, and C1005 are each set at 0.1D (according to Criterion A1) and the bandwidth for transmitting C1001 is set at 0.7D (=D-0.1D×3) (according to Criterion A3).

The time period between 8:14:00 and 8:15:00 is for the reproduction time period of the specific program CM1 and is included in the preceding time periods of CM2 and CM3. In this period, the bandwidth for transmitting control contents S1001 is set at 0.05D (according to Criterion A2) and the bandwidths for transmitting C1003 and C1005 are each set at 0.1D (according to Criterion A1). Therefore, the bandwidth for transmitting contents C1002 of CM1 is set at 0.75D (=D-0.05D-0.1D×2) (according to Criterion A3).

The time period between 8:15:00 and 8:16:00 is for the reproduction time period of CM2 and is included in the preceding time period of CM3. In this period, the bandwidth for transmitting control contents S1002 is set at 0.05D (according to Criterion A2) and the bandwidth for transmitting C1005 is set at 0.1D (according to Criterion A1). Therefore, the bandwidth for transmitting contents C1003 of CM2 is set at 0.85D (=D-0.05D-0.1D) (according to Criterion A3).

Next, the time period between 8:16:00 and 8:34:00 is for the reproduction time period of the program 2 and the preceding time period of CM3. In this period, the bandwidth for transmitting contents C1005 of CM3 is set at 0.1D (according to Criterion A1) and therefore the bandwidth for transmitting contents C1004 of the program 2 is set at 0.9D (=D-0.1D) (according to Criterion A3).

The time period between 8:34:00 and 8:35:00 is for the reproduction time period of CM3. In this period, the bandwidth for transmitting control contents S1003 is set at 0.05D (according to Criterion A2) and the bandwidth for transmitting contents C1005 of CM3 is set at 0.95D (=D-0.05D) (according to Criterion A3).

The contents holding unit 113 stores contents data, while bringing these.data into correspondence with their respective contents codes. Here, the contents data includes graphical images which present information relating to the program, scripts which are executed in accordance with the interactive operation by the user, and the like.

The data module preparation unit 104 refers to the transmission schedule which is prepared by the contents transmission scheduling unit 103, prepares a data module using contents data stored in the contents holding unit 113, and writes the data module in the data module holding unit 109, while bringing the data module into correspondence with the contents codes. Here, the data module is the contents data which is represented in a form for transmission and one data module is made from one contents data. An ID is assigned to a data module, and the data module with the ID=0 must be cached in the buffer by the receiving apparatus even though there is no explicit instruction. In addition, the data module preparation unit 104 adds messages, which designate the receiving apparatus to receive the data modules with IDs other than 0 and cache the data modules in the buffer and to reproduce it, in the contents data as the source of the data module with ID=0, before preparing the data module with ID=0. Here, one data module is divided into a block in a unit of a fixed length, and is transmitted in this block unit.

The following describes a method for assigning IDs to data modules and a message which is described in the contents data as a source of the data module with ID=0.

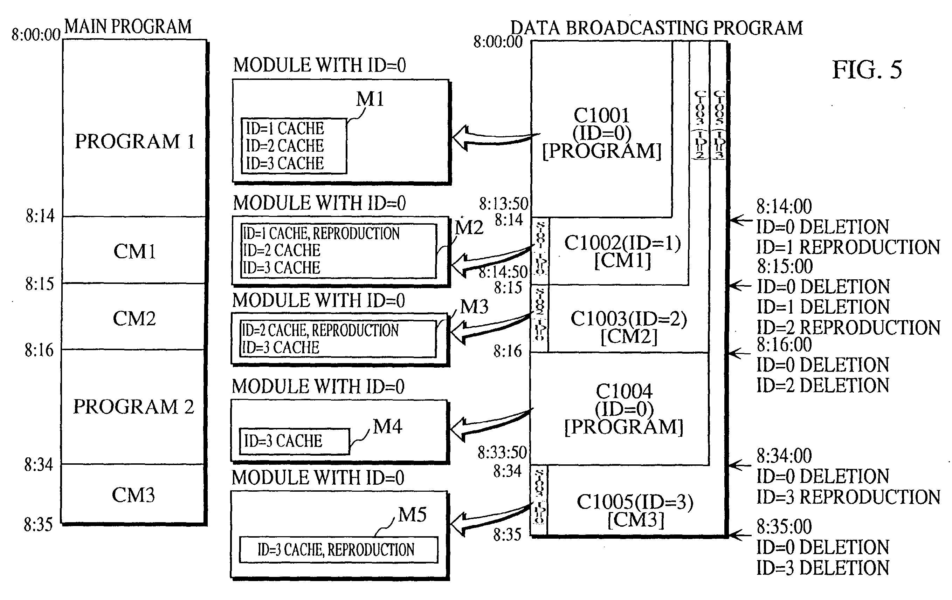

Fig. 5 shows a main program, a data broadcasting program, and messages included in the data modules corresponding to the contents of the data broadcasting program. In this figure, the downward direction indicates a time flow and the breadth of the boxes indicates a bandwidth, which are conformity with the schedule shown in Fig. 4. As for the data module, messages included in the data module with ID=0 are indicated in the figure. Also, at the right side of the drawing for the data broadcasting program in Fig. 5, timing for transmitting event messages are shown (which will be described later).

First, the data module preparation unit 104 prepares data modules with ID=0, ID=1, ID=2, and ID=3 from contents data C1001, C1002, C1003, and C1005 in accordance with the contents transmission schedule shown in Fig. 4. Here, the data module preparation unit 104 embeds a message M1 which designates to cache data modules (C1002, C1003, and C1005) with ID=1, ID=2, and ID=3 which are transmitted concurrently with the contents data (C1001) in the contents data (C1001) as the source of the data module with ID=0, and then prepares a data module with ID=0 using the contents data C1001.

Further, the data module preparation unit 104 prepares a data module with ID=0 which corresponds to control contents S1001. That is, the data module preparation unit 104 embeds a message M2, which designates to cache and immediately reproduce a data module (C1002) with ID=1 which is concurrently transmitted and to cache data modules (C1003 and C1005) with ID=2 and ID=3, in the contents data S1001 and then prepares a data module with ID=0 using the contents S1001.

Also, the data module preparation unit 104 prepares a data module with ID=0 which corresponds to control contents S1002. That is, the data module preparation unit 104 embeds a message M3, which designates to cache and immediately reproduce a data module (C1003) with ID=2 which is concurrently transmitted and to cache a data module (C1005) with ID=3, in the contents data S1002, and then prepares a data module with ID=0 using the contents data S1002.

Besides, the data module preparation unit 104 prepares a data module with ID=0 which corresponds to contents data C1004. That is, the data module preparation unit 104 embeds a message M4, which designates to cache a data module (C1005) with ID=3 which is concurrently transmitted, in the contents data C1004, and then prepares a data module with ID=0 using the contents data C1004.

Moreover, the data module preparation unit 104 prepares a data module with ID=0 which corresponds to control contents S1003. That is, the data module preparation unit 104 embeds a message M5, which designates to cache and immediately reproduce a data module (C1005) with ID=3, in the contents data S1003, and prepares a data module with ID=0 using the contents data S1003.

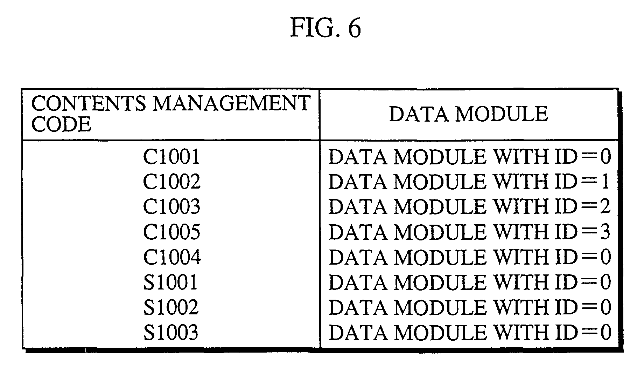

The data module holding unit 109 stores the data modules prepared by the data module preparation unit 104, while bringing the data modules into correspondence with contents management codes. Fig. 6 shows correspondences between the contents management codes and the data modules.

The event message transmission scheduling unit 105 refers to the contents transmission schedule prepared by the contents transmission scheduling unit 103 and prepares an event message transmission schedule. There are three types of event messages which each designate to delete, reproduce, and cache the specified contents data. When the receiving apparatus receives the event message which designates to delete contents data, the receiving apparatus deletes the contents data from the buffer. When the receiving apparatus receives the event message which designates to reproduce contents data, the receiving apparatus reads the contents data from the buffer and reproduce the same. When the receiving apparatus receives the instruction to cache the contents data and in case that the contents data has not been cached in the buffer, then the receiving apparatus writes the received contents data in the buffer.

The event message transmission scheduling unit 105 refers to the contents transmission schedule and the program information, and prepares a schedule for transmitting an event message which designates for the receiving apparatus to delete contents data from the recording apparatus or to reproduce contents data in the recording apparatus in accordance with the following criteria.

### (Criterion B1)

The schedule is prepared so that an event message which designates to delete the contents data for a program is transmitted at the finishing time of the program.

### (Criterion B2)

The schedule is prepared so that an event message which designates to reproduce the contents data for a specific program is transmitted at the starting time of the specific program.

### (Criterion B3)

As for control contents, the schedule is prepared so that an event message which designates to delete the control contents is transmitted at a time when the transmission of the contents data has been completed.

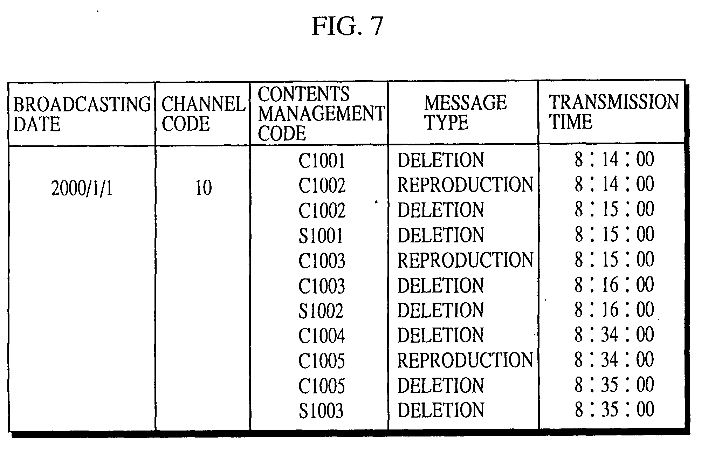

Fig. 7 shows an example of an event message transmission schedule. As shown in this figure, for example, as for contents C1001, the schedule is prepared so that an event message which designates to delete the contents is transmitted at 8:14:00 when the program which is made up of the contents is scheduled to finish (according to Criterion B1).

As for contents C1002 for the specific program CM1, the schedule is prepared so that an event message which designates to reproduce the contents is transmitted at 8:14:00 when the program is scheduled to start (according to Criterion B2), and so that an event message which designates to delete the contents is transmitted at 8:15:00 when the program is scheduled to finish (according to Criterion B1).

As for control contents S1001, the schedule is prepared so that an event message which designates to delete the contents is transmitted at 8:15:00 when the transmission of the contents is scheduled to have been completed (according to Criterion A3).

As for contents C1003 for the specific program CM2, the schedule is prepared so that an event message which designates to reproduce the contents is transmitted at 8:15:00 when the program is scheduled to start (according to Criterion B2), and an event message which designates to delete the contents data is transmitted at 8:16:00 when the program is scheduled to finish (according to Criterion B1).

As for control contents S1002, the schedule is prepared so that an event message which designates to delete the contents is transmitted at 8:16:00 when the transmission of the contents data is scheduled to have been completed (according to Criterion B3).

As for contents C1004, the schedule is prepared so that an event message which designates to delete the contents is transmitted at 8:34:00 when the program which is made up of the contents is scheduled to finish (according to Criterion B1)

As for contents data C1005 for the specific program CM3, the schedule is prepared so that an event message which designates to reproduce the contents is transmitted at 8:34:00 when the program is scheduled to start (according to Criterion B2), and the schedule is prepared so that an event message which designates to delete the contents is transmitted at 8:35:00 when the program is scheduled to finish (according to Criterion B1).

As for contents data for control S1003, the schedule is prepared so that an event message which designates to delete the contents is transmitted at 8:35:00 when the transmission of the contents data is scheduled to have been completed (according to Criterion B3).

In accordance with the audiovisual data transmission schedule transmitted by the audiovisual data transmission scheduling unit 102, the audiovisual data transmission controlling unit 106 reads the audiovisual data which corresponds to the audiovisual data management codes included in the schedule from the audiovisual data holding unit 107, and outputs the audiovisual data to the multiplexing unit 111.

The audiovisual data holding unit 107 stores audiovisual data which corresponds to the audiovisual data management codes.

In accordance with the contents transmission schedule transmitted by the contents transmission scheduling unit 103, the data module transmission controlling unit 108 repeatedly reads the data module which corresponds to the contents codes included in the schedule from the data module holding unit 109, and outputs the data module to the multiplexing unit 111.

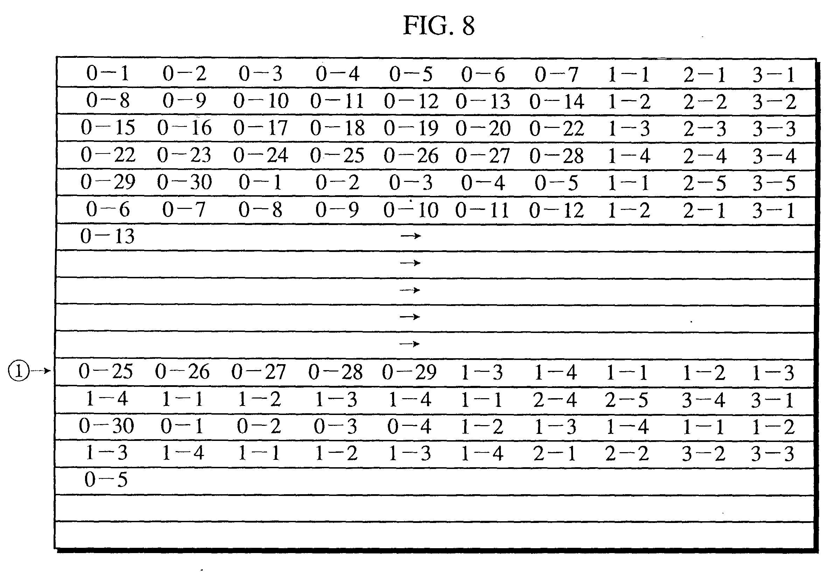

Fig. 8 shows a transmission procedure of the data modules during the time period between 8:00:00 and 8:14:00. Data module with ID=0 for C1001, data module with ID=1 for C1002, data module with ID=2 for C1003, and data module with ID=3 for C1005 respectively consist of thirty, four, five, and five blocks. In this figure, the notation "1-3" means that a block whose block number is 3 and which makes up the data module with ID=1 is transmitted.

As shown in this figure, the block of the data module (C1001) with ID=0 is transmitted 7 times out of 10, because the transmission bandwidth is 0.7D. Data module (C1002) with ID=1, data module (C1003) with ID=2, and data module (C1005) with ID=3 are each transmitted once out of 10, because each of their transmission bandwidth is 0.1D.

The event message transmission controlling unit 110 outputs event messages to the multiplexing unit 111 in accordance with the event message transmission schedule transmitted by the event message transmission scheduling unit 105. The transmission timing for event messages shown in Fig. 5 are conformity with the event message transmission schedule shown in Fig. 7.

As shown in Fig. 5, at 8:14:00, an event message which designates to delete contents C1001 (data module with ID=0) and an event message which designates to reproduce contents C1002 (data module with ID=1) are transmitted in this order. At 8:15:00, an event message which designates to delete contents S1001 (data module with ID=0), an event message which designates to delete the contents C1002 (data module with ID=1), and an event message which designates to reproduce contents C1003 (data module with ID=2) are transmitted in this order. At 8:16:00, an event message which designates to delete the contents S1002 (data module with ID=0) and an event message which designates to delete the contents data C1003 (data module with ID=2) are transmitted in this order. At 8:34:00, an event message which designates to delete contents C1004 (data module with ID=0) and an event message which designates to reproduce contents C1005 (data module with ID=3) are transmitted in this order. At 8:35:00, an event message which designates to delete contents S1003 (data module with ID=0) and an event message which designates to delete the contents C1005 (data module with ID=3) are transmitted in this order.

The multiplexing unit 111 performs time division multiplexing of the audiovisual data transmitted by the audiovisual data transmission controlling unit 106 and the event messages transmitted by the event message transmission controlling unit 110 to generate a multiplexed stream, and outputs the multiplexed stream to the transmission unit 112. Here, the event messages are promptly transmitted. Besides, the data modules and the event messages use a fixed bandwidth which is allocated to the contents data, whereas the audiovisual data uses a fixed bandwidth which is allocated to the audiovisual data.

The transmission unit 112 modulates the multiplexed stream transmitted by the multiplexing unit 111 into the broadcast wave and transmits the same.

### (Operations)

The following describes the operations for preparing the data modules and the event messages and transmitting them to the multiplexing unit 111. Explanations of operations for transmitting audiovisual data and multiplexing the audiovisual data, the data module, and the event messages will be omitted, because those operations can be realized according to well-known technology.

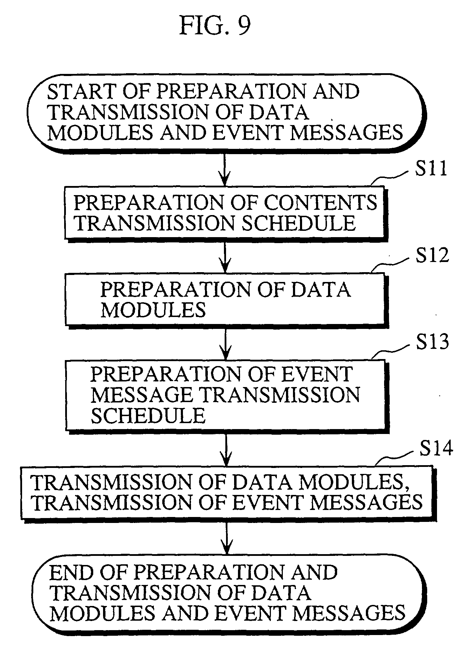

Fig. 9 is a flow chart showing a procedure for preparing data modules and event messages and transmitting them.

First, the contents transmission scheduling unit 103 prepares a contents transmission schedule in accordance with the program information stored in the program information holding unit 101 (Step S11). Here, the contents transmission scheduling unit 103 prepares the schedule so that a narrow band is allocated to the specific program than the preceding program in the preceding time period in accordance with the above-mentioned (Criterion A1) through (Criterion A3).

Next, the data module preparation unit 104 prepares a data module using contents data stored in the contents holding unit 113 in accordance with the contents transmission schedule and outputs the data module to the data module holding unit 109 (Step S12).

Next, the event message transmission scheduling unit 105 prepares an event message transmission schedule in accordance with the contents transmission schedule and the program information (Step S13).

Next, the data module transmission controlling unit 108 reads the data module from the data module holding unit 109 in accordance with the contents transmission schedule and transmits the data module to the multiplexing unit 111. In addition, the event message transmission controlling unit 110 generates event messages in accordance with the event message transmission schedule and outputs the event messages to the multiplexing unit 111 (Step S14). As a result, as shown in Fig. 5, in the preceding time period, contents data for the specific program among data broadcasting programs are multiplexed with the contents data of the preceding program and the multiplexed contents data is transmitted.

### (Receiving Apparatus)

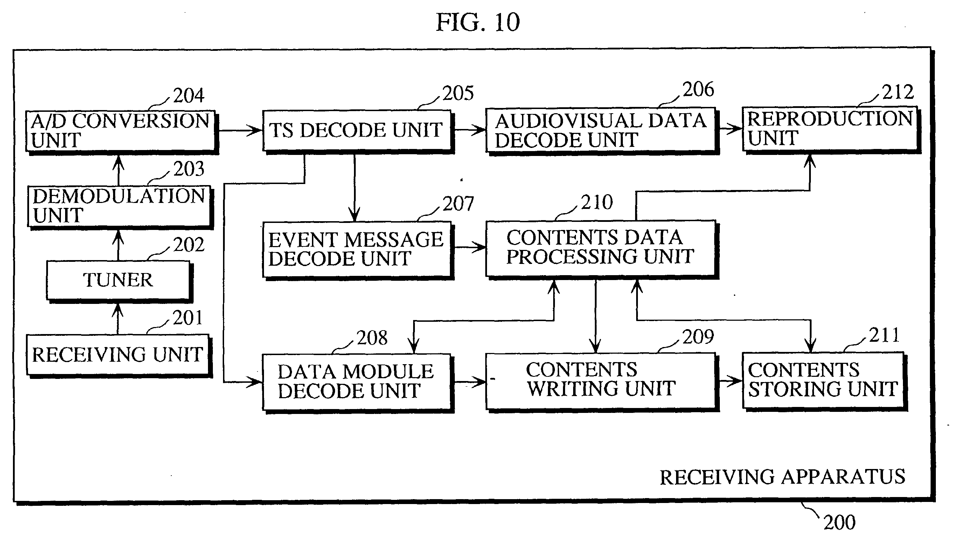

Fig. 10 is a block diagram showing the construction of the receiving apparatus. The receiving apparatus 200 is composed of a receiving unit 201, a tuner 202, a demodulation unit 203, an A/D conversion unit 204, a TS decode unit 205, an audiovisual data decode unit 206, an event message decode unit 207, a data module decode unit 208, a contents writing unit 209, a contents data processing unit 210, a contents storing unit 211, and a reproduction unit 212.

The receiving unit 201 receives broadcast wave and is made up of a parabolic antenna and so on.

The tuner 202 tunes in to the broadcast wave to receive the broadcast wave and transmits the same to the demodulation unit 203.

The demodulation unit 203 demodulates the received broadcast wave and transmits the same to the A/D conversion unit 204.

The A/C conversion unit 204 converts the demodulated broadcast wave into digital signals to generate a TS packet.

The TS decode unit 205 decodes the TS packet to generate an audiovisual stream and a data stream.

The audiovisual data decode unit 206 decodes the audiovisual stream and transmits the same to the reproduction unit 212.

The event message decode unit 207 decodes an event message included in the data stream and transmits the same to the contents data processing unit 210.

The data module decode unit 208 decodes the data module' with ID=0 in the data stream to reconstruct contents data, and when receiving the instruction to cache the contents data with the specified ID from the contents data processing unit 210, decodes the data module with the specified ID. Then, the data module decode unit 208 transmits a message included in the reconstructed contents data to the contents data processing unit 210, brings graphical images and execution scripts in the contents data into correspondence with IDs, and transmits the same to the contents writing unit 209.

The contents writing unit 209 stores the contents transmitted from the data module decode unit 208 in the contents storing unit 211.

The contents data processing unit 210 receives the event messages from the event message decode unit 207 and the messages from the data module decode unit 208. In case that the received event message designates to delete the contents, the contents data processing unit 210 deletes the contents with the ID specified by the event message from the contents storing unit 211. In case that the received message designates to cache the contents with the specified ID and the contents has not been stored in the contents storing unit 211, the contents data processing unit 210 designates the data module decode unit 208 to decode the contents with the specified ID. In case that the received message designates to reproduce the contents, the contents data processing unit 210 reads the contents from the contents storing unit 211 and transmits the same to the reproduction unit 212.

For example, at the time period before 8:14:00 shown in Fig. 5 (i.e., the preceding time period of the specific program CM1), the message M1 is passed form the data module decode unit 208 to the contents data processing unit 210. Then, the contents data processing unit 210 instructs the data module decode unit 208 to decode contents data C1002, C1003, and C1005 with ID=1, ID=2, and ID=3 in accordance with the message M1. Consequently, the decoded contents data is stored (cached) in the contents storing unit 211 by the contents writing unit 209. Furthermore, the contents data processing unit 210 reads the contents C1002 from the contents storing unit 211 in accordance with the event message (which instructs to reproduce the contents data with ID=1) that is transmitted at 8:14:00 shown in Fig. 5.

The contents storing unit 211 serves as a buffer for storing the contents data, while bringing the contents data into correspondence with the IDs.

The reproduction unit 212 reproduces the audiovisual data and the contents.

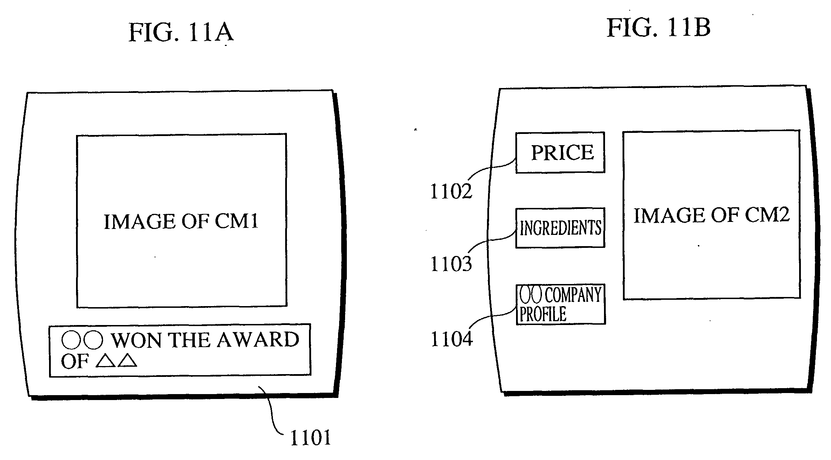

Fig. 11 shows examples of reproduced images. Fig. 11(a) shows an example of a reproduced image of the specific program CM1. In this figure, an image of the main program CM1 is scaled down and presented on the center of the screen, and a still image (or a text) included in the contents C1002 is also presented. Sounds of the main program CM1 is also reproduced at the same time. In this way, the main program CM1 and the specific program CM1 as the data broadcasting program are reproduced simultaneously. Fig. 11(b) shows an example of a reproduced image in which the main program CM2 and the specific program CM2 as the data broadcasting program are reproduced simultaneously in the same manner as in the Fig. 11(a).

As stated above, according to the broadcasting apparatus of the invention, the contents data of the specific program is transmitted as well as the contents data of the preceding data broadcasting program in the time period preceding to the specific program. Therefore, the receiving apparatus can receive the contents data of the specific program prior to the reproduction time period of the specific program, so that all interactive operations which are free from the waiting time for receiving the data can be realized from the beginning of the reproduction time period of the specific program.

### [Embodiment 2]

A broadcasting apparatus according to the second embodiment is different from the first embodiment in that the first contents data is transmitted in the time period preceding to the specific program and the second contents data is transmitted in the reproduction time period of the specific program. The first contents data is, for example, almost the same as the second contents data but different in part from the second contents data. The different part includes higher quality (i.e., the data size is larger) images than the second contents data or content that indicates a quiz and a prize relating to the preceding program. That is, the first and the second contents data is constructed so that the first contents data gives a higher quality image, more interesting contents, or benefit to viewers as compared with the second contents data. This is because viewer who views the first contents data views a program from earlier on.

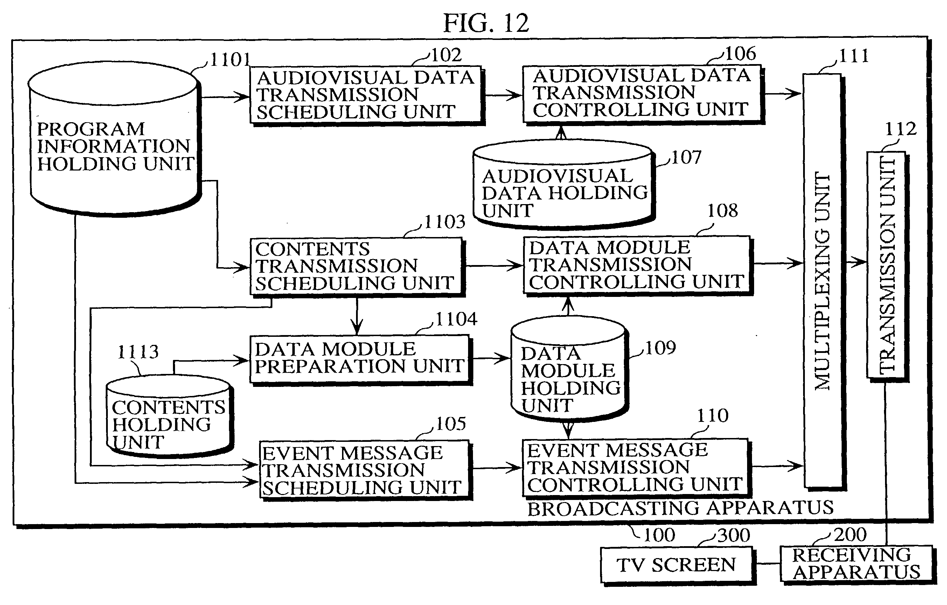

Fig. 12 is a block diagram showing the construction of the broadcasting apparatus according to the second embodiment.

This figure is different from the broadcasting apparatus of the first embodiment in that a program information holding unit 1101, a contents transmission scheduling unit 1103, a data module preparation unit 1104, and a contents storing unit 1113 are provided instead of the program information holding unit 101, the contents transmission scheduling unit 103, the data module preparation unit 104, and the contents holding unit 113. Note here that construction elements which are the same as those in the first embodiment have been given the same reference numerals and their explanation has been omitted.

The program information holding unit 1101 stores two types of contents management codes each which correspond to the specific program. For example, this unit stores the contents codes of NC1002 and RC1002 so as to correspond to the specific program CM1, the contents codes of NC1003 and RC1003 so as to correspond to the specific program CM2, and the contents codes of NC1005 and RC1005 so as to correspond to the specific program CM3.

The contents holding unit 1113 stores the contents having the above two types of contents management codes relating to the specific programs. Here, NC1002, NC1003, and NC1005 are normal graphical images, whereas RC1002, RC1003, and RC1005 have the same content as the above contents but having a higher quality computer-graphical images.

The data module preparation unit 1104 prepares different data modules from the above first and second contents. In this case, the data module is prepared so that different IDs are assigned to the first contents and the 'second contents, which prevents the first contents data which has been cached within the recording apparatus from being overwritten by the second contents. For example, the data module preparation unit 1104 assigns the ID of the data module prepared from NC1002 as 4 and assigns the ID of the data module prepared from RC1002 as 1. Likewise, the data module preparation unit 1104 assigns the IDs of the data modules prepared from NC1003 and RC1003 as 5 and 2, respectively, and assigns the IDs of the data modules prepared from NC1005 and RC1005 as 6 and 3, respectively.

The contents transmission scheduling unit 1103 prepares a contents transmission schedule so that the first contents data is transmitted in the preceding time period of the specific program and the second contents data is transmitted in the reproduction time period.

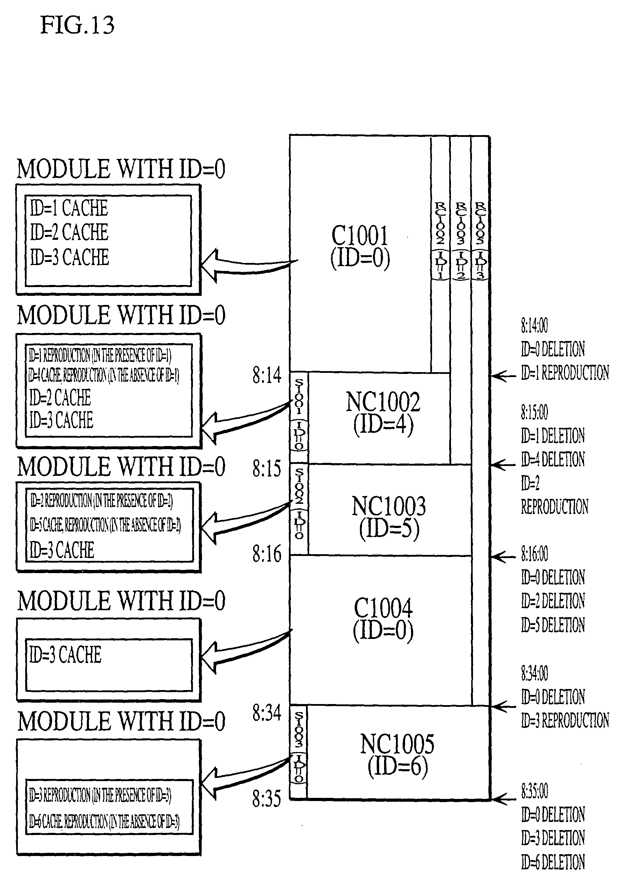

Fig. 13 shows an example of a contents transmission schedule. As shown in this figure, the contents transmission scheduling unit 1103 prepares the schedule so that RC1002 is transmitted in the preceding time period of the CM1 and NC1002 is transmitted in the reproduction time period of the CM1, RC1003 is transmitted in the preceding time period of the CM2 and NC1003 is transmitted in the reproduction time period of the CM2, and RC1005 is transmitted in the preceding time period of the CM3 and NC1005 is transmitted in the reproduction time period of the CM3.

Thereby, the receiving apparatus reproduces the first contents data whose image quality is high to the viewer who starts to view a program from a time in the preceding time period of the CM1, whereas the second data whose image quality is normal to the viewer who starts to view the CM1 from a time in the reproduction time period of the CM1.

The event message transmission scheduling unit 105 prepares a schedule in the same manner as in the first embodiment. Here, the schedule is prepared so that the first contents is reproduced in case that the first contents data has been cached, and the second contents is reproduced in case that the second contents only has been cached.

### (Summary)

As stated above, the broadcasting apparatus according to the second embodiment transmits the first contents data in the preceding time period of the specific program, and the second contents data is transmitted in the reproduction time period. Therefore, the broadcasting apparatus can provide value-added information to a viewer who starts to view a program from a time before the reproduction time period as compared with a viewer who starts to view the specific program from a time in the reproduction time period.

Here, in this embodiment, a part of the first contents data is a higher quality graphical image than the second contents data. However, all of the contents data may be different from each other. That is, considering CM, the first contents data and the second contents data may be totally different data each of which relate to the same product (or service and the like). Alternatively, they may be totally different data each of which relate to different products (or services and the like) provided by the same sponsor.

### [Modifications]

Although the embodiments of the broadcasting apparatus according to the invention are described as above, the invention is not limited to the above embodiments. That is, naturally, the invention includes the following modifications.

### (1)Preceding Time Period

In the above embodiments, the preceding time periods of CM1, CM2, and CM3 as the specific programs begins at the starting time of the program 1 which is the immediately preceding program to the CM1 and ends at the starting time of the reproduction time period of each specific program. However, the preceding time periods are not limited to them.

In addition, contents data of a CM may be transmitted for the broadcast time period of the program which is provided by the sponsor of the CM.

### (2)Transmission of the Contents after the Reproduction Time Period of the Specific Program

In the above embodiments, the transmission of the contents has completed at the finishing time of the reproduction time period of the specific program. However, the same CM is broadcasted again after the reproduction time period in many cases, and therefore it may be preferable that the contents of the CM is repeatedly transmitted after the reproduction time period in such cases. Further, the broadcasting apparatus can easily control the transmission of the contents by continuously transmitting the contents using a fixed bandwidth even before and after the reproduction time period.

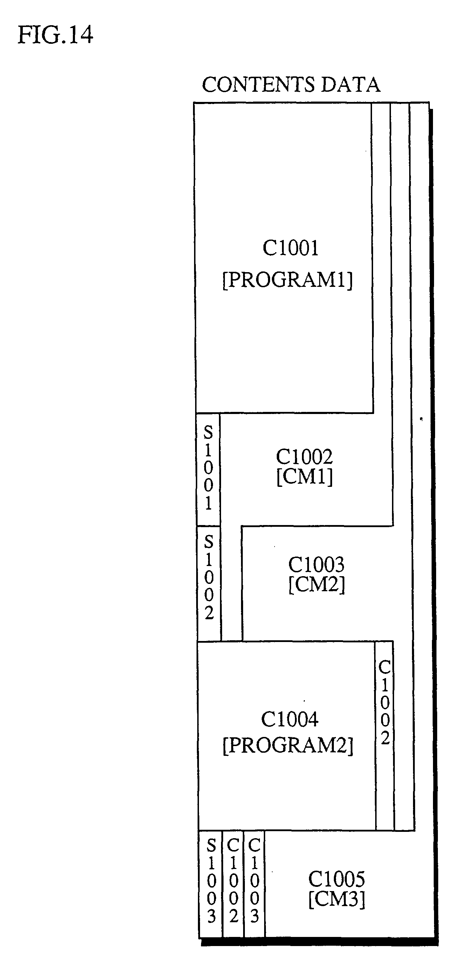

Fig. 14 shows an example of a contents transmission schedule in this case. As shown in this figure, the contents of the specific programs CM1, CM2, and CM3 are transmitted using a bandwidth of 0.1D even before and after their reproduction time periods.

### (3)Carousel Transmission

In the above embodiments, contents data of the specific programs are transmitted according to the data carousel transmission method in the preceding time period. This method is effective in case that all of the transmitted contents data cannot be acquired due to a reception error or a part of the contents data is missed due to an overflow from the buffer or the like. However, under conditions where such problems do not occur, contents data may be transmitted only once in the preceding time period.

### (4)Transmission Bandwidth

The transmission bandwidths shown in the above embodiments are just one example and they are not limited to the above example. For instance, the following bandwidths are applicable.
(a) When a data broadcasting program other than the specific programs is being broadcasted, a fixed transmission bandwidth, for example 0.3D, is allocated to all of the contents data for the specific programs, irrespective of before and after the reproduction time period of all specific programs.

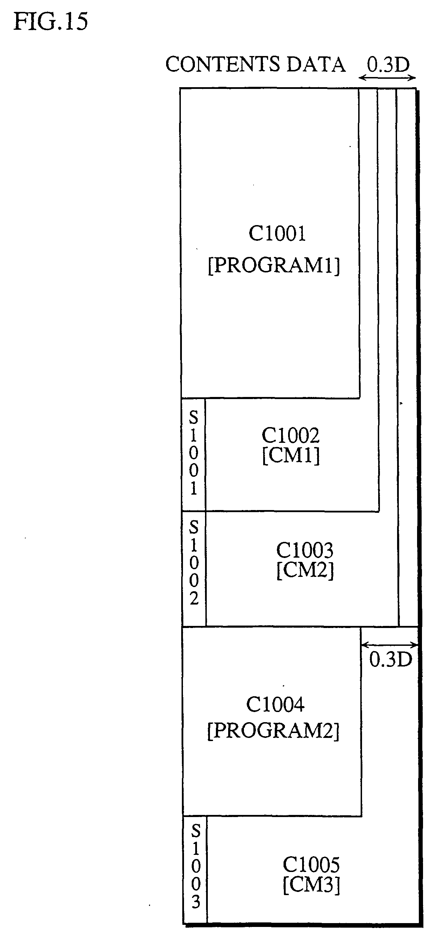

   Fig. 15 shows an example of a contents transmission schedule in this case. During the reproduction time period of the programs 1 and 2 which are not the specific program, a transmission bandwidth of 0.1D is allocated for transmitting each of the contents C1002, C1003, and C1005 of the specific programs CM1, CM2, and CM3, respectively.
(b) When a data broadcasting program other than the specific programs is being broadcasted, a fixed transmission bandwidth, for example 0.3D, is allocated for transmitting the contents data of the specific programs which follows such a data broadcasting program.

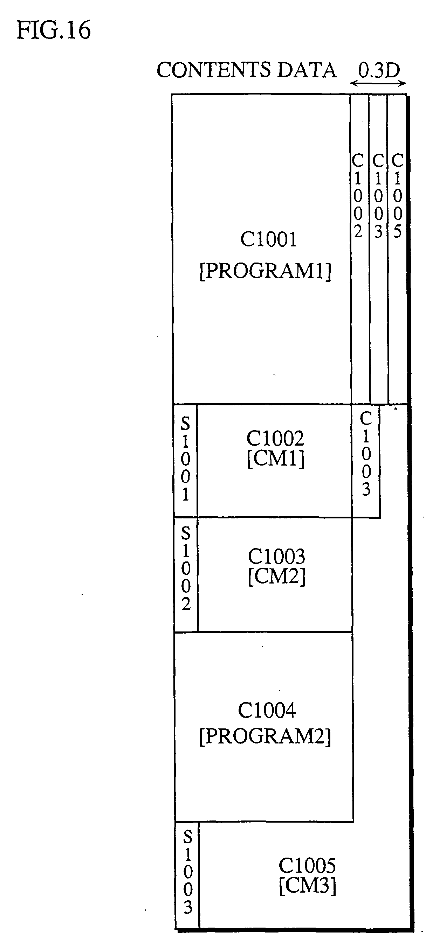

   Fig. 16 shows an example of a contents transmission schedule in this case. During the reproduction time period of the program 1, a transmission bandwidth of 0.1D is allocated to each of contents data C1002, C1003, and C1005 of the specific programs CM1, CM2, and CM3, respectively, because this time period is also for the preceding time periods of the CM1, CM2, and CM3.
   During the reproduction time period of the program 2, a transmission bandwidth of 0.3D is allocated for transmitting contents C1005 of the CM3, because this period is also for the preceding time period of the CM3.
(c) The above embodiments deal with the case where the total bandwidth for the contents data is a fixed bandwidth. However, the total bandwidth may be variable.

### (5)Event Messages

In the above embodiments, in order to make the receiving apparatus cache the contents of the specific program which has been transmitted in the preceding time period, a message which designates the receiving apparatus to cache the contents data is embedded in the data module with ID=0. Instead, an event message which designates the same content may be transmitted.

For example, instead of embedding a message M1 which designates to cache C1002, C1003, and C1005 in the data module with C1001 (ID=0) as shown in Fig. 5, the message may be transmitted as an event message. As for messages M2 through M5 as well, they may be transmitted as event messages in the same way. This method is preferable in the sense that the data module can be reused (for example, in case of repeating the program), because the data module C1001 does not have a message which depends on another program.

As for control contents S1001, only the message which designates to cache and reproduce contents data C1002 of the now being broadcasted program is embedded, and the message which designates to cache the other contents may be transmitted as an event message.

In addition, by shortening a time interval for transmitting an event message than the transmission period of the contents, the transmitted contents can be promptly cached. For instance, supposing the transmission period of the contents C1002 (ID=1) is T (this period can be calculated using the data size of the contents and the transmission bandwidth of the contents which is indicated in the contents transmission schedule), an event message can be transmitted at a time interval of 0.1T.

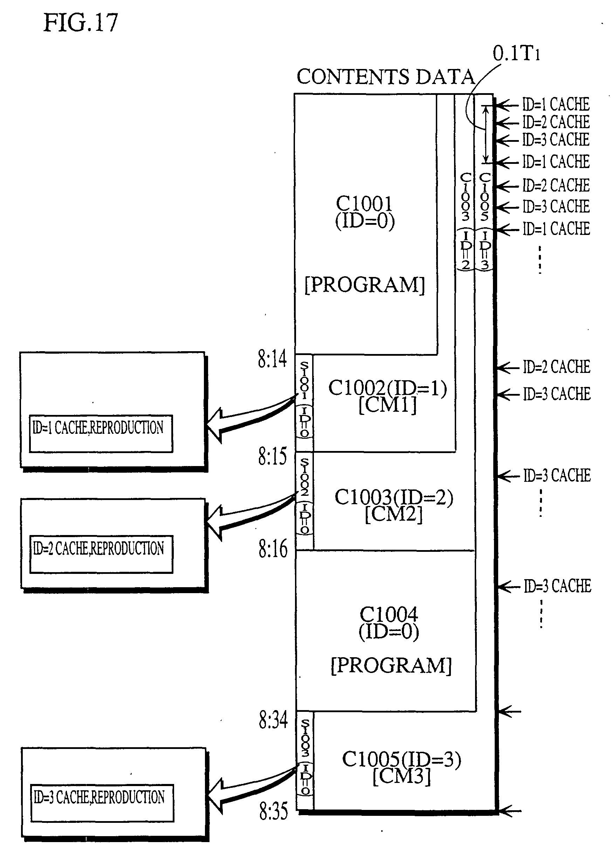

Fig. 17 shows an example of an event message transmission schedule in this case. As shown in this figure, unlike Fig. 5, event messages which designate the receiving apparatus to cache the contents C1002 (ID=1) , C1003 (ID=2), and C1005 (ID=3) of the specific programs are transmitted in their preceding time periods. An event message which designates to cache the contents data with ID=1 is transmitted at a time interval of 1 second, in case that T is set at 10 seconds.

Further, instead of embedding a message, which designates to cache and reproduce the contents data of the specific program in the reproduction time period, in the control contents, the message may be transmitted as an event message.

Alternatively, messages which designate to (a) cache the data module with the specified module ID in case of receiving the event message with event ID =1, (b) delete the data module with the specified module ID in case of receiving the event message with event ID =2, and (c) reproduce the data module with the specified module ID in case of receiving the event message with event ID=3 may be described in the specific contents. In this state, the content is transmitted beforehand so that the event messages having event IDs and module IDs are transmitted and then the receiving apparatus executes the instructions.

Alternatively, instead of transmitting an event message which designates the receiving apparatus to promptly execute the instruction when the receiving apparatus receives the event message, an event message which designates the receiving apparatus to execute the instruction at the time specified by the received event message may be transmitted.

### (6)Specific Programs

In the above embodiments, commercials are described as the specific programs. However, normal programs may be specific programs. Here, it is preferable that the data size of the contents of the specific program does not exceed the storage capacity of the contents storing unit 211 (buffer) in the receiving apparatus .

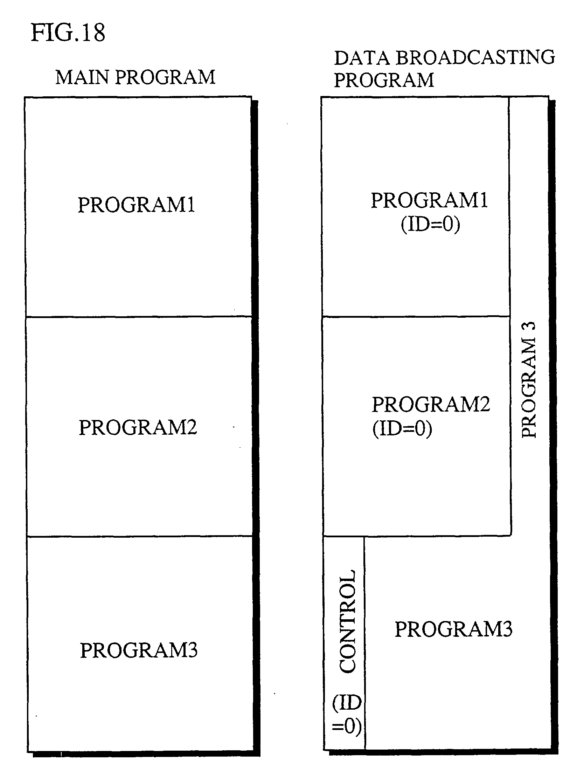

Fig. 18 shows an example in which the program 3 as the data broadcasting program is a specific program. As shown in this figure, the contents data of the program 3 is transmitted using the transmission bandwidth of 0.2D in the preceding transmission period of the program 3.

### (7)Broadcast Programs

Although the above embodiments deal with the case where the main program and the data broadcasting program are reproduced simultaneously, this invention is naturally applicable in the case where they are not reproduced simultaneously but the desired data broadcasting program is specified for the specific program.

### (8)Control Contents

In the above embodiments, a message which designates to cache and reproduce the contents for the specific program in the reproduction time period should be embedded in the control contents and therefore the contents data for control becomes necessary. However, the invention can be realized without the control contents. For example, two types of contents in which the first type contents is to be transmitted as the contents data of the CM1 in the preceding time period and the second type contents is to be transmitted in the reproduction time period are prepared, and the ID of the former contents is set at 1 in the same manner as in the above embodiments, while the ID of the latter contents data being set at 0. Thereby, the receiving apparatus can receive the contents data with ID=0 during the reproduction time period. Alternatively, setting the IDs of the both types of contents at 1, a message which designates to take in the contents with ID=1 may be transmitted as an event message.

In addition, instead of embedding the message M1 which designates to cache C1002, C1003, and C1005 in the data module C1001 (ID=1) shown in Fig. 5, it is possible that the ID of the C1001 is set at a number other than 0, the control contents with ID=0 is transmitted during the broadcast time of the program, and the message M1 is transmitted as the control contents. This method is preferable in the sense that the data module can be reused (for example, in case of repeating the program), because the data module C1001 does not have a message which depends on another program.

### (9)Embedment of Messages in Contents Data

In the above embodiments, after embedding messages which designate to such as cache and reproduce the contents data, the data module preparation unit 104 prepares the data module with ID=0 using the contents data. However, contents data in which such instructions are embedded beforehand may prepared and stored in the contents holding unit 113.

### (10)Contents Storing Unit

In the above embodiments, the broadcasting apparatus precedently transmits the program data of the specific programs in the preceding time period and the receiving apparatus cache the transmitted program data in the content storing unit 211. Here, it is preferable that the contents storing unit 211 is composed of a semiconductor memory in terms of an access speed, whereas hard disk in terms of a storage capacity. Therefore, the contents storing unit 211 may operate using the both of the hard disk and the semiconductor memory.

In this case, the receiving apparatus may be constructed as follows: that is, when receiving an event message which designates to delete the cached program data, the receiving apparatus deletes only the program data stored in the semiconductor memory but keeps the program data stored in the hard disk for a predetermined time period. After that, when receiving an event message which designates to cache the program data and in case that the specified program data has been stored in the hard disk, the receiving apparatus reads the program data from the hard disk instead of receiving the data via broadcast wave and copies it on the semiconductor memory.

Alternatively, the receiving apparatus may be constructed so that, when receiving an event message which designates to cache the program data and in case that it is possible to acquire the specified program data from another medium, the receiving apparatus reads the program data from the other medium instead of receiving it via broadcast wave and copies it on the semiconductor memory. Here, the other medium may be optical disks such as CDs and DVDs on which the program data has been recorded beforehand and which are distributed to users.

### (11)Modification of Preceding Transmission of the Data Broadcasting Program

In the above embodiments, the receiving apparatus stores (caches) the program data in the contents storing unit 211, and the control for this procedure is performed using event messages. Here, the program data and the event messages are both transmitted via broadcast wave. However, at least one of the program data and the event message may be transmitted from another medium (transmission media or storage media) to the receiving apparatus.

For instance, the receiving apparatus may be constructed so as to receive the program data via broadcast wave and event messages through Internet or telephone lines. Alternatively, the receiving apparatus may be constructed so as to read the program data from storage media such as optical disks which are able to be distributed to users and receive event messages via broadcast wave.

### (12)Programs

The invention can be realized by preparing programs in which functions of the broadcasting apparatus shown in Fig. 1 and the receiving apparatus shown in Fig. 12 are described and by executing the programs by a microcomputer provided in the broadcasting apparatus and the receiving apparatus. These programs can be recorded on the recording media such as CDs and hard disks and can be readable to the microcomputer in the broadcasting apparatus and the receiving apparatus. Alternatively, these programs may be taken in the broadcasting apparatus and the receiving apparatus through a communication network.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A broadcasting apparatus that broadcasts a specific program to which a reproduction time period between a starting time and a finishing time is specified, the reproduction being performed by a receiving apparatus, the broadcasting apparatus comprising:
allotment means for allotting a broadcasting bandwidth for the reproduction time period to the specific program and allotting a part of the broadcasting bandwidth for a preceding time period immediately before the reproduction time period to the specific program and the other part of the broadcasting bandwidth to another program; and
transmission means, in accordance with the result of allotment by the allotment means, for (a)repeatedly transmitting program data of the other program while transmitting program data of the specific program in the preceding time period, and (b) repeatedly transmitting the program data of the specific program in the reproduction time period.

2. The broadcasting apparatus of Claim 1,
wherein the allotment means allots the broadcasting bandwidth for the preceding time period so that the part of the broadcasting bandwidth becomes narrower than the other part of the broadcasting bandwidth, and
the preceding time period is longer than a time period that is necessary for transmitting the program data of the specific program at least once using the part of the bandwidth.

3. The broadcasting apparatus of Claim 1, further comprising:
generation means for (a) generating a first instruction that instructs the receiving apparatus to store the program data of the specific program in a storing unit in the receiving apparatus, and (b) generating a second instruction that instructs the receiving apparatus to reproduce the program data in case that the program data of the specific program has been stored in the storing unit,
wherein the transmission means transmits a plurality of the first instructions in the preceding time period and transmits the second instruction at the starting time of the reproduction time period.

4. The broadcasting apparatus of Claim 1, further comprising:
storage means for storing as the program data of the specific program (a) first contents data that makes up the specific program and (b) second contents data that is different from the first contents data in part,
wherein the transmission means transmits the first contents data in the preceding time period and transmits the second contents data in the reproduction time period of the specific program.

5. The broadcasting apparatus of Claim 1,
wherein the transmission means further transmits a normal program that includes a video stream and an audio stream,
the specific program has the program data that relates to a commercial program which is inserted in the normal program, and
the reproduction time period of the specific program is the same as a broadcast time period of the commercial program.

6. The broadcasting apparatus of Claim 5,
wherein the allotment means allots the broadcasting bandwidth for the preceding time period so that the part of the broadcasting bandwidth becomes narrower than the other part of the broadcasting bandwidth, and
the preceding time period is longer than a time period that is necessary for transmitting the program data of the specific program at least once using the part of the bandwidth.

7. The broadcasting apparatus of Claim 6, further comprising:
generation means for (a) generating a first instruction that instructs the receiving apparatus to store the program data of the specific program in a storing unit in the receiving apparatus, and (b) generating a second instruction that instructs the receiving apparatus to reproduce the program data in case that the program data of the specific program has been stored in the storing unit,
wherein the transmission means transmits a plurality of the first instructions in the preceding time period and transmits the second instruction at the starting time of the reproduction time period.

8. The broadcasting apparatus of Claim 7, further comprising:
storage means for storing as the program data of the specific program (a) first contents data that makes up the specific program and (b) second contents data that is different from the first contents data in part,
wherein the transmission means transmits the first contents data in the preceding time period and transmits the second contents data in the reproduction time period of the specific program.

9. A broadcasting apparatus that transmits a data broadcasting program and a first and a second specific programs which are inserted in the data broadcasting program, the broadcasting apparatus comprising:
allotment means for
(a) allotting a broadcasting bandwidth for a first time period and a second time period to the first specific program and the second specific program, the first time period and the second time period are included in a total time period between a starting time and a finishing time for broadcasting the data broadcasting program, and
(b) allotting a part of the broadcasting bandwidth to the first and the second specific programs and the other part of the broadcasting bandwidth to the data broadcasting program for all of time periods other than the first and the second time periods in the total time period;
instruction generation means for generating a first storage instruction and a second storage instruction that instruct the receiving apparatus to store a program data for the first specific program and a program data for the second specific program in a storing unit in the receiving apparatus, respectively, and generating a first reproduction instruction and a second reproduction instruction that instruct a receiving apparatus to reproduce the program data for the first specific program and the program data for the second specific program, respectively, in case that the program data for the first specific program and the program data for the second specific program have been stored in the storing unit;
transmission means for repeatedly transmitting the program data of each of the data broadcasting program, the fist specific program, and the second specific program in accordance with the result of allotment by the allotment means; and
control means for controlling the transmission means so as to transmit (a) a plurality of the first storage instructions before the first time period, (b)the first reproduction instruction at the starting time of the first time period, (c) a plurality of the second storage instructions before the second time period, and (d) the second reproduction instruction at the starting time of the second time period.

10. The broadcasting apparatus of Claim 9,
wherein the transmission means further transmits a normal program that includes a video stream and an audio stream,
the first specific program and the second specific program respectively have the program data that relates to a first commercial program and a second commercial program which are inserted in the normal program, and
the first time period and the second time period respectively are the same as broadcast time periods of the first commercial program and the second commercial program.

11. The broadcasting apparatus of Claim 10, further comprising:
storage means for storing as the program data of the first specific program (a) first contents data that makes up the first specific program and (b) second contents data that is different from the first contents data in part,
wherein the transmission means transmits the first contents data in a time period other than the first time period in the total time period, and transmits the second contents data in the first time period.

12. A broadcasting apparatus that transmits a data broadcasting program and a first and a second specific programs which are inserted in the data broadcasting program, the broadcasting apparatus comprising:
allotment means for
(a) allotting a broadcasting bandwidth for a first time period and a second time period to the first specific program and the second specific program, the first time period and the second time period are included in a total time period between a starting time and a finishing time for broadcasting the data broadcasting program, and
(b) allotting (1) a broadcasting bandwidth to the data broadcasting data program in the total time period except for the first time period and the second time period, (2) a part of the broadcasting bandwidth to the first specific program for a time period preceding to the first time period in the total time period, and (3) a part of the broadcasting bandwidth to the second specific program for a time period preceding to the second time period in the total time period;
instruction generation means for generating a first storage instruction and a second storage instruction that instruct a receiving apparatus to store a program data for the first specific program and a program data for the second specific program in a storing unit in the receiving apparatus, respectively, and generating a first reproduction instruction and a second reproduction instruction that instruct the receiving apparatus to reproduce the program data for the first specific program and the program data for the second specific program, respectively, in case that the program data for the first specific program and the program data for the second specific program have been stored in the storing unit;
transmission means for repeatedly transmitting the program data of each of the data broadcasting program, the fist specific program, and the second specific program in accordance with the result of allotment by the allotment means; and
control means for controlling the transmission means so as to transmit (a) a plurality of the first storage instructions before the first time period, (b)a plurality of the second storage instructions before the second time period, (c)the first reproduction instruction at the starting time of the first time period, and (d) the second reproduction instruction at the starting time of the second time period.

13. The broadcasting apparatus of Claim 12,
wherein the transmission means further transmits a normal program that includes a video stream and an audio stream,
the first specific program and the second specific program respectively have the program data that relates to a first commercial program and a second commercial program which are inserted in the normal program, and
the first time period and the second time period respectively are the same as broadcast time periods of the first commercial program and the second commercial program.

14. The broadcasting apparatus of Claim 13, further comprising:
storage means for storing as the program data of the first specific program (a) first contents data that makes up the first specific program and (b) second contents data that is different from the first contents data in part,
wherein the transmission means transmits the first contents data in a time period preceding to the first time period in the total time period, and transmits the second contents data in the first time period.

15. A broadcasting method for broadcasting a specific program to which a reproduction time period between a starting time and a finishing time is specified, the reproduction being performed by a receiving apparatus, the broadcasting method comprising the steps of:
an allotment step for allotting a broadcasting bandwidth for the reproduction time period to the specific program and allotting a part of the broadcasting bandwidth for a preceding time period immediately before the reproduction time period to the specific program and the other part of the broadcasting bandwidth to another program; and
a transmission step, in accordance with the result of allotment in the allotment step, for (a) repeatedly transmitting program data of the other program while transmitting program data of the specific program in the preceding time period, and (b) repeatedly transmitting the program data of the specific program in the reproduction time period.

16. A broadcasting method for broadcasting a data broadcasting program and a first specific program and a second specific program which are inserted in the data broadcasting program, the broadcasting method comprising the steps of:
an allotment step for
(a) allotting a broadcasting bandwidth for a first time period and a second time period to the first specific program and the second specific program, the first time period and the second time period are included in a total time period between a starting time and a finishing time for broadcasting the data broadcasting program, and
(b) allotting a part of the broadcasting bandwidth to the first and the second specific programs and the other part of the broadcasting bandwidth to the data broadcasting program for all of time periods other than the first and the second time periods in the total time period;
an instruction generation step for generating a first storage instruction and a second storage instruction that instruct the receiving apparatus to store a program data for the first specific program and a program data for the second specific program in a storing unit in the receiving apparatus, respectively, and generating a first reproduction instruction and a second reproduction instruction that instruct a receiving apparatus to reproduce the program data for the first specific program and the program data for the second specific program, respectively, in case that the program data for the first specific program and the program data for the second specific program have been stored in the storing unit; and
a transmission step for transmitting (a)a plurality of the first storage instructions before the first time period, (b)the first reproduction instruction at the starting time of the first time period, (c)a plurality of the second storage instructions before the second time period, and (d)the second reproduction instruction at the starting time of the second time period, while repeatedly transmitting the program data of each of the data broadcasting program, the fist specific program, and the second specific program in accordance with the result of allotment in the allotment step.

17. A broadcasting method for broadcasting a data broadcasting program and a first specific program and a second specific program which are inserted in the data broadcasting program, the broadcasting method comprising the steps of:
an allotment step for
(a) allotting a broadcasting bandwidth for a first time period and a second time period to the first specific program and the second specific program, the first time period and the second time period are included in a total time period between a starting time and a finishing time for broadcasting the data broadcasting program, and
(b) allotting (1) a broadcasting bandwidth to the data broadcasting data program in the total time period except for the first time period and the second time period, (2) a part of the broadcasting bandwidth to the first specific program for a time period preceding to the first time period in the total time period, and (3) a part of the broadcasting bandwidth to the second specific program for a time period preceding to the second time period in the total time period;
an instruction generation step for generating a first storage instruction and a second storage instruction that instruct a receiving apparatus to store a program data for the first specific program and a program data for the second specific program in a storing unit in the receiving apparatus, respectively, and generating a first reproduction instruction and a second reproduction instruction that instruct the receiving apparatus to reproduce the program data for the first specific program and the program data for the second specific program, respectively, in case that the program data for the first specific program and the program data for the second specific program have been stored in the storing unit; and
a transmission step for transmitting (a)a plurality of the first storage instructions before the first time period, (b)a plurality of the second storage instructions before the second time period, (c) the first reproduction instruction at the starting time of the first time period, and (d)the second reproduction instruction at the starting time of the second time period, while repeatedly transmitting the program data of each of the data broadcasting program, the fist specific program, and the second specific program in accordance with the result of allotment in the allotment step.

18. A program recording medium which is readable for a computer in a broadcasting apparatus, the broadcasting apparatus broadcasts a specific program to which a reproduction time period between a starting time and finishing time is specified, the reproduction being performed by a receiving apparatus, a computer program embodied on the program recording medium has the computer conduct the steps of:
an allotment step for allotting a broadcasting bandwidth for the reproduction time period to the specific program and allotting a part of the broadcasting bandwidth for a preceding time period immediately before the reproduction time period to the specific program and the other part of the broadcasting bandwidth to other program; and
a transmission step, in accordance with the result of allotment in the allotment step, for (a) repeatedly transmitting program data of the other program while transmitting program data of the specific program in the preceding time period, and (b) repeatedly transmitting the program data of the specific program in the reproduction time period.

19. A program recording medium which is readable for a computer in a broadcasting apparatus, the broadcasting apparatus transmits a data broadcasting program and a first and a second specific programs which are inserted in the data broadcasting program, a computer program embodied on the program recording medium has the computer conduct the steps of:
an allotment step for
(a) allotting a broadcasting bandwidth for a first time period and a second time period to the first specific program and the second specific program, the first time period and the second time period are included in a total time period between a starting time and a finishing time for broadcasting the data broadcasting program, and
(b) allotting a part of the broadcasting bandwidth to the first and the second specific programs and the other part of the broadcasting bandwidth to the data broadcasting program for all of time periods other than the first and the second time periods in the total time period;
an instruction generation step for generating a first storage instruction and a second storage instruction that instruct the receiving apparatus to store a program data for the first specific program and a program data for the second specific program in a storing unit in the receiving apparatus, respectively, and generating a first reproduction instruction and a second reproduction instruction that instruct a receiving apparatus to reproduce the program data for the first specific program and the program data for the second specific program, respectively, in case that the program data for the first specific program and the program data for the second specific program have been stored in the storing unit; and
a transmission step for transmitting (a)a plurality of the first storage instructions before the first time period, (b)the first reproduction instruction at the starting time of the first time period, (c)a plurality of the second storage instructions before the second time period, and (d)the second reproduction instruction at the starting time of the second time period, while repeatedly transmitting the program data of each of the data broadcasting program, the fist specific program, and the second specific program in accordance with the result of allotment in the allotment step.

20. A program recording medium which is readable for a computer in a broadcasting apparatus, the broadcasting apparatus transmits a data broadcasting program and a first and a second specific programs which are inserted in the data broadcasting program, a computer program embodied on the program recording medium has the computer conduct the steps of:
an allotment step for
(a) allotting a broadcasting bandwidth for a first time period and a second time period to the first specific program and the second specific program, the first time period and the second time period are included in a total time period between a starting time and a finishing time for broadcasting the data broadcasting program, and
(b) allotting (1) a broadcasting bandwidth to the data broadcasting data program in the total time period except for the first time period and the second time period, (2) a part of the broadcasting bandwidth to the first specific program for a time period preceding to the first time period in the total time period, and (3) a part of the broadcasting bandwidth to the second specific program for a time period preceding to the second time period in the total time period;
an instruction generation step for generating a first storage instruction and a second storage instruction that instruct a receiving apparatus to store a program data for the first specific program and a program data for the second specific program in a storing unit in the receiving apparatus, respectively, and generating a first reproduction instruction and a second reproduction instruction that instruct the receiving apparatus to reproduce the program data for the first specific program and the program data for the second specific program, respectively, in case that the program data for the first specific program and the program data for the second specific program have been stored in the storing unit; and
a transmission step for transmitting (a)a plurality of the first storage instructions before the first time period, (b)a plurality of the second storage instructions before the second time period, (c)the first reproduction instruction at the starting time of the first time period, and (d)the second reproduction instruction at the starting time of the second time period, while repeatedly transmitting the program data of each of the data broadcasting program, the fist specific program, and the second specific program in accordance with the result of allotment in the allotment step.

21. A program that is readable for a computer in a broadcasting apparatus, the broadcasting apparatus broadcasts a specific program to which a reproduction time period between a starting time and finishing time is specified, the reproduction being performed by a receiving apparatus, the program has the computer conduct the steps of:
an allotment step for allotting a broadcasting bandwidth for the reproduction time period to the specific program and allotting a part of the broadcasting bandwidth for a preceding time period immediately before the reproduction time period to the specific program and the other part of the broadcasting bandwidth to other program; and
a transmission step, in accordance with the result of allotment in the allotment step, for (a) repeatedly transmitting program data of the other program while transmitting program data of the specific program in the preceding time period, and (b) repeatedly transmitting the program data of the specific program in the reproduction time period.

22. A program that is readable for a computer in a broadcasting apparatus, the broadcasting apparatus transmits a data broadcasting program and a first and a second specific programs which are inserted in the data broadcasting program, the program has the computer conduct the steps of:
an allotment step for
(a) allotting a broadcasting bandwidth for a first time period and a second time period to the first specific program and the second specific program, the first time period and the second time period are included in a total time period between a starting time and a finishing time for broadcasting the data broadcasting program, and
(b) allotting a part of the broadcasting bandwidth to the first and the second specific programs and the other part of the broadcasting bandwidth to the data broadcasting program for all of time periods other than the first and the second time periods in the total time period;
an instruction generation step for generating a first storage instruction and a second storage instruction that instruct the receiving apparatus to store a program data for the first specific program and a program data for the second specific program in a storing unit in the receiving apparatus, respectively, and generating a first reproduction instruction and a second reproduction instruction that instruct a receiving apparatus to reproduce the program data for the first specific program and the program data for the second specific program, respectively, in case that the program data for the first specific program and the program data for the second specific program have been stored in the storing unit; and
a transmission step for transmitting (a)a plurality of the first storage instructions before the first time period, (b)the first reproduction instruction at the starting time of the first time period, (c)a plurality of the second storage instructions before the second time period, and (d)the second reproduction instruction at the starting time of the second time period, while repeatedly transmitting the program data of each of the data broadcasting program, the fist specific program, and the second specific program in accordance with the result of allotment in the allotment step.

23. A program that is readable for a computer in a broadcasting apparatus, the broadcasting apparatus transmits a data broadcasting program and a first and a second specific programs which are inserted in the data broadcasting program, the program has the computer conduct the steps of:
an allotment step for
(a) allotting a broadcasting bandwidth for a first time period and a second time period to the first specific program and the second specific program, the first time period and the second time period are included in a total time period between a starting time and a finishing time for broadcasting the data broadcasting program, and
(b) allotting (1) a broadcasting bandwidth to the data broadcasting data program in the total time period except for the first time period and the second time period, (2) a part of the broadcasting bandwidth to the first specific program for a time period preceding to the first time period in the total time period, and (3) a part of the broadcasting bandwidth to the second specific program for a time period preceding to the second time period in the total time period;
an instruction generation step for generating a first storage instruction and a second storage instruction that instruct a receiving apparatus to store a program data for the first specific program and a program data for the second specific program in a storing unit in the receiving apparatus, respectively, and generating a first reproduction instruction and a second reproduction instruction that instruct the receiving apparatus to reproduce the program data for the first specific program and the program data for the second specific program, respectively, in case that the program data for the first specific program and the program data for the second specific program have been stored in the storing unit; and
a transmission step for transmitting (a)a plurality of the first storage instructions before the first time period, (b)a plurality of the second storage instructions before the second time period, (c)the first reproduction instruction at the starting time of the first time period, and (d) the second reproduction instruction at the starting time of the second time period, while repeatedly transmitting the program data of each of the data broadcasting program, the fist specific program, and the second specific program in accordance with the result of allotment in the allotment step.
